# EUROPEAN PATENT APPLICATION

(11) **EP 4 772 370 A1**
(43) Date of publication of application: **08.07.2026**
(21) Application number: 24869643.7
(22) Date of filing: 29.03.2024
(51) Int. Cl.: B60K 1/04, B62D 25/20, B60L 50/60, B60L 50/64, H01M 50/204, H01M 50/10

(54) **VEHICLE BODY, CONNECTING STRUCTURE FOR CHEMICAL COMPARTMENT, VEHICLE, AND ASSEMBLY METHOD FOR VEHICLE BODY**

(30) Priority: 27.09.2023 CN 202311274602
(71) Applicant: Contemporary Amperex Intelligence Technology (Shanghai) Limited, Shanghai 201306 (CN)
(72) Inventor: HE, Bin, Shanghai 201306 (CN)
(74) Representative: Gong, Jinping
(86) International application number: PCT/CN2024/084995
(87) International publication number: WO 2025/066073

(57) **Abstract**

A vehicle body (100), a connecting structure for a chemical compartment (40), a vehicle (1000), and an assembly method for the vehicle body (100) are provided. The vehicle body (100) includes the chemical compartment (40), where the chemical compartment (40) defines an accommodating space (401) for accommodating a battery cell (60) and a top opening in communication with the accommodating space (401). The chemical compartment (40) is provided with a sealing region (402) and a mounting point (50). The sealing region (402) extends around the top opening and is configured to be in sealing fit with a fitting component, so that the fitting component covers and seals the top opening. The mounting point (50) is configured for mounting of the chemical compartment (40), and the mounting point (50) is located outside a region enclosed by the sealing region (402)

## Description

### CROSS-REFERENCE TO RELATED APPLICATIONS

The present application claims priority to Chinese Patent Application No. "202311274602.1" filed on September 27, 2023 by CONTEMPORARY AMPEREX INTELLIGENCE TECHNOLOGY (SHANGHAI) LIMITED, which is incorporated herein by reference in its entirety.

### TECHNICAL FIELD

The present application relates to the technical field of vehicles, and specifically relates to a vehicle body, a connecting structure for a chemical compartment, a vehicle, and an assembly method for a vehicle body.

### BACKGROUND

In the related art, there are many factors causing sealing failure of chemical compartments, leading to easy sealing failure of the chemical compartment and reducing sealing reliability.

### SUMMARY

Embodiments of the present application provide a vehicle body, which can reduce factors causing sealing failure of chemical compartments.

According to a first aspect, an embodiment of the present application provides a vehicle body, including: a chemical compartment. The chemical compartment defines an accommodating space for accommodating a battery cell and a top opening in communication with the accommodating space, where the chemical compartment is provided with a sealing region and a mounting point. The sealing region extends around the top opening and is configured to be in sealing fit with a fitting component, to allow the fitting component to cover and seal the top opening. The mounting point is configured for mounting of the chemical compartment, and the mounting point is located outside a region enclosed by the sealing region.

In the above technical solution, the fitting component is in sealing fit with the sealing region of the chemical compartment, and the mounting point of the chemical compartment is located outside the region enclosed by the sealing region. This helps to improve the smoothness and continuity of a sealing surface and makes sealing less likely to be affected by other components, making it easier to achieve sealing, reducing factors in the region enclosed by the sealing region that are likely to cause sealing failure, and improving the sealing reliability.

In some embodiments, the sealing region is a smooth surface.

In the above technical solution, the smooth surface can achieve continuous sealing between different regions of the chemical compartment and the fitting component such as a front floor, improving the continuity of the sealing surface and reducing factors causing sealing failure.

In some embodiments, the vehicle body further includes a sealing ring, and the sealing ring is in sealing contact with the sealing region.

In the above technical solution, the provision of the sealing ring can greatly enhance the sealing effect of the chemical compartment, making it easier to meet waterproof and dustproof requirements.

In some embodiments, the mounting point includes a mounting hole for mounting a fastener, and the fastener is configured to apply a locking force along an up-down direction to the chemical compartment, to compress the sealing region.

In the above technical solution, the fastener applies a locking force along the up-down direction to the chemical compartment, so that a compression force between the sealing region of the chemical compartment and the fitting component such as the front floor can be increased, enhancing the sealing effect, thereby helping to meet the waterproof and dustproof requirements.

In some embodiments, the mounting point includes a first mounting point, and the first mounting point is configured to be connected to the fitting component.

In the above technical solution, the chemical compartment is connected to the fitting component through the first mounting point. This, on one hand, can achieve mounting of the chemical compartment, and the first mounting point is located outside the sealing region to reduce factors causing sealing failure inside the sealing region. On the other hand, the first mounting point of the chemical compartment is directly connected to the fitting component, which has a more significant effect in improving the sealing between the chemical compartment and the fitting component.

In some embodiments, the mounting point includes a second mounting point, and the second mounting point is configured to be connected to a sill beam.

In the above technical solution, the chemical compartment is connected to the sill beam through the second mounting point, where the first mounting point and the second mounting point cooperate to increase connection sites of the chemical compartment, thereby improving the mounting stability of the chemical compartment and helping to enhance the sealing effect of the sealing region.

In some embodiments, the chemical compartment includes a side beam, a first outward protrusion portion provided on an upper portion of a peripheral surface of the side beam, and a second outward protrusion portion provided on a lower portion of the peripheral surface of the side beam. The sealing region is provided on an upper end surface of the side beam, the first mounting point is provided on the first outward protrusion portion, and the second mounting point is provided on the second outward protrusion portion.

In the above technical solution, the first outward protrusion portion and the second outward protrusion portion are respectively provided on the upper portion and the lower portion of the peripheral surface of the side beam, so that their connections to the sill beam and a floor do not interfere with each other, and the chemical compartment can be mounted in a larger range in the up-down direction, improving the mounting stability. In addition, the first outward protrusion portion and the second outward protrusion portion help to enhance the structural strength of the side beam and improve the collision resistance.

In some embodiments, the vehicle body further includes a floor, where the floor serves as the fitting component and is in sealing fit with the sealing region to cover and seal the top opening, and a portion of the floor opposite the region enclosed by the sealing region continuously extends.

In the above technical solution, the sealing and connection between the floor and the chemical compartment can be achieved before the assembly of the vehicle body and the upper vehicle body, which is prone to improving the convenience and the sealing effect of the sealing operation. Moreover, airtightness detection between the floor and the chemical compartment does not need to be performed simultaneously with detection of a body-in-white, and there is no need to develop a detection line and repair line for the chemical compartment in a general assembly workshop, helping to accelerate the production takt and reducing cost man-hours.

In some embodiments, the floor includes a front floor, a peripheral edge of the front floor is provided with a connecting portion configured to be connected to the sill beam, and the connecting portion is located outside the region enclosed by the sealing region.

In the above technical solution, the connecting portion is located outside the region enclosed by the sealing region, so that a connecting structure of the connecting portion does not affect the sealing of the chemical compartment, sealing failure of the connecting portion does not lead to sealing failure of the chemical compartment, and height differences of the connecting portion and the like do not affect the sealing difficulty of the chemical compartment.

In some embodiments, the mounting point includes a third mounting point, the third mounting point is configured to be connected to a dash board, the floor includes a first fitting edge at least partially located outside the region enclosed by the sealing region, and an upper surface of the first fitting edge is configured to fit with a lower surface of the dash board in a facing manner.

In the above technical solution, the chemical compartment can be mounted and fastened at a front side of the third mounting point, improving the stability of the chemical compartment and the uniformity of a circumferential force applied to the chemical compartment.

In some embodiments, the chemical compartment includes a side beam and a third outward protrusion portion provided on an upper portion of a peripheral surface of the side beam, the sealing region is provided on an upper surface of the side beam, and the third mounting point is provided on the third outward protrusion portion.

In the above technical solution, the third mounting point is close to the sealing region, which is more conducive to enhancing the sealing effect of the sealing region. Moreover, the third mounting point is provided on the third outward protrusion portion, facilitating the mounting operation at the third mounting point. The third outward protrusion portion can also enhance the structural strength of the side beam and improve the collision resistance.

In some embodiments, the mounting point includes a fourth mounting point, the fourth mounting point is configured to be connected to a rear floor, the floor includes a front floor, the front floor includes a second fitting edge at least partially located outside the region enclosed by the sealing region, and an upper surface of the second fitting edge is configured to fit with a lower surface of the rear floor in a facing manner.

In the above technical solution, the chemical compartment can be mounted and fastened at a rear side of the fourth mounting point, improving the stability of the chemical compartment and the uniformity of a circumferential force applied to the chemical compartment.

In some embodiments, the chemical compartment includes a side beam and a fourth outward protrusion portion provided on an upper portion of a peripheral surface of the side beam, the sealing region is provided on an upper surface of the side beam, and the fourth mounting point is provided on the fourth outward protrusion portion.

In the above technical solution, the fourth mounting point is close to the sealing region, which is more conducive to enhancing the sealing effect of the sealing region. Moreover, the fourth mounting point is provided on the fourth outward protrusion portion, facilitating the mounting operation at the fourth mounting point. The fourth outward protrusion portion can also enhance the structural strength of the side beam and improve the collision resistance.

In some embodiments, the vehicle body includes a front compartment assembly and a rear floor assembly, the chemical compartment is connected between the front compartment assembly and the rear floor assembly, and the chemical compartment is suitable for being detachably connected to an upper vehicle body of a vehicle, where the upper vehicle body includes the fitting component.

In the above technical solution, the chemical compartment is detachably connected to the upper vehicle body, and the upper vehicle body includes the fitting component, so that when the chemical compartment needs maintenance, the chemical compartment can be separated from the upper vehicle body, and thus the chemical compartment is separated from the fitting component, achieving convenient maintenance of the chemical compartment.

In some embodiments, the vehicle body includes a front compartment assembly, a front floor assembly, and a rear floor assembly, the front floor assembly is connected between the front compartment assembly and the rear floor assembly, the front floor assembly includes the fitting component, and the chemical compartment is located on a lower side of the front floor assembly and detachably connected to the front floor assembly.

In the above technical solution, during maintenance of the chemical compartment, the chemical compartment can be dismounted from the vehicle body and separated from the fitting component to achieve dismounting of the chemical compartment, and the dismounting process is not affected by interior components of a passenger compartment, so that there is no need to dismount the interior components of the passenger compartment, simplifying the mounting and dismounting processes.

According to a second aspect, an embodiment of the present application further provides a connecting structure for a chemical compartment, including: a chemical compartment, where the chemical compartment defines an accommodating space for accommodating a battery cell and a top opening in communication with the accommodating space; a fitting component, where the fitting component covers and seals the top opening; and a sealing ring, where the sealing ring is provided between the fitting component and the chemical compartment and extends around the top opening. A portion of the fitting component opposite a region enclosed by the sealing ring continuously extends.

In the above technical solution, the fitting component seals the top opening of the chemical compartment, and a portion of the fitting component opposite the region enclosed by the sealing ring continuously extends, so that factors causing sealing failure between the fitting component and the chemical compartment can be reduced, improving the sealing reliability.

In some embodiments, the chemical compartment is provided with a mounting point, the mounting point is configured to be connected to at least one of the fitting component and a dash board, and the mounting point is located outside the region enclosed by the sealing ring; and/or the fitting component includes a front floor and is provided with a connecting point, the connecting point is configured to be connected to at least one of a sill beam, a rear floor, and a dash board, and the connecting point is located outside the region enclosed by the sealing ring.

In the above technical solution, joints of portions of the fitting component and the chemical compartment opposite the region enclosed by the sealing region can be reduced, improving the flatness, also helping to reduce factors causing sealing failure, and improving the sealing reliability.

According to a third aspect, an embodiment of the present application further provides a vehicle, including an upper vehicle body and the above vehicle body, where the vehicle body is provided on a lower side of the upper vehicle body; or including the above connecting structure for a chemical compartment.

In the above technical solution, factors in the region enclosed by the sealing region that are likely to cause sealing failure can be reduced, improving the sealing reliability.

According to a fourth aspect, an embodiment of the present application further provides an assembly method for the above vehicle body, where the assembly method includes: allowing a sealing region of a chemical compartment to be in sealing fit with a fitting component to cover and seal a top opening of the chemical compartment; and connecting a mounting point of the chemical compartment to at least one of the fitting component and a dash board, to compress the sealing region.

In the above technical solution, the fitting component is in sealing fit with the chemical compartment, and the chemical compartment is connected through the mounting point to compress the sealing region, so that the sealing effect can be enhanced to meet the waterproof and dustproof requirements. In addition, a connecting structure of the mounting point is located outside the region enclosed by the sealing region, and factors causing sealing failure between the fitting component and the chemical compartment can be reduced after assembly, improving the sealing reliability.

### BRIEF DESCRIPTION OF DRAWINGS

FIG. 1 is a schematic partial structural diagram of a vehicle body according to an embodiment of the present application;
FIG. 2 is a schematic diagram of a chemical compartment, a front floor assembly, a rear floor, and a dash board according to an embodiment of the present application;
FIG. 3 is a schematic partial structural diagram of a chemical compartment, a front floor, and a sill beam according to an embodiment of the present application;
FIG. 4 is a schematic diagram of a partial fitting structure of a chemical compartment and a dash board according to an embodiment of the present application;
FIG. 5 is a schematic diagram of a partial fitting structure of a chemical compartment and a rear floor according to an embodiment of the present application; and
FIG. 6 is a schematic diagram of a vehicle according to an embodiment of the present application.

Reference numerals in the drawings:
vehicle 1000;
vehicle body 100; upper vehicle body 200;
front compartment assembly 10; dash board 11; first plate body 111; first reinforcing plate 112;
front floor assembly 20; front floor 21; connecting portion 211; first fitting edge 212; second fitting edge 213; sill beam 22;
rear floor assembly 30; rear floor 31; second plate body 311; second reinforcing plate 312;
chemical compartment 40; accommodating space 401; sealing region 402; first outward protrusion portion 41; second outward protrusion portion 42; third outward protrusion portion 43; fourth outward protrusion portion 44; side beam 45;
mounting point 50; first mounting point 51; second mounting point 52; third mounting point 53; fourth mounting point 54;
battery cell 60;
sealing ring 70; fastener 80; and seat mounting beam 90.

### DESCRIPTION OF EMBODIMENTS

To make the objectives, technical solutions, and advantages of the embodiments of the present application clearer, the technical solutions in the embodiments of the present application are clearly described below with reference to the drawings in the embodiments of the present application. Obviously, the described embodiments are some embodiments rather than all embodiments of the present application. Based on the embodiments in the present application, all other embodiments obtained by those of ordinary skill in the art without creative efforts fall within the protection scope of the present application.

Unless otherwise defined, all technical and scientific terms used in the present application have the same meaning as commonly understood by those of ordinary skill in the art to which the present application belongs. The terms used in the specification of the present application are for the purpose of describing specific embodiments only and are not intended to limit the present application. The terms "include", "comprise", "have", and any variations thereof in the specification and claims of the present application and the above brief description of drawings are intended to cover non-exclusive inclusions. The terms "first", "second", and the like in the specification, claims, and above brief description of drawings of the present application are used to distinguish different objects rather than to describe a specific order or primary-secondary relationship.

The mention of "embodiment" in the present application means that a particular feature, structure, or characteristic described in combination with this embodiment can be included in at least one embodiment of the present application. The appearance of this phrase at various places in the specification does not necessarily refer to the same embodiment, nor is it an independent or alternative embodiment that is mutually exclusive with other embodiments.

In the description of the present application, it should be noted that, unless otherwise clearly specified and limited, the terms "mounting", "connection", "join", or "attachment" should be understood in a broad sense. For example, it may be a fixed connection, a detachable connection, or an integral connection; it may be a direct connection, or an indirect connection through an intermediate medium; or it may be a communication between two elements. For those of ordinary skill in the art, the specific meanings of the above terms in the present application can be understood according to specific situations.

The term "and/or" in the present application is merely an association relationship describing associated objects, indicating that three relationships may exist. For example, A and/or B may indicate the following three cases: only A is present, both A and B are present, and only B is present. In addition, the character "/" in the present application generally indicates that the contextually associated objects are in an "or" relationship.

In the embodiments of the present application, the same reference numerals indicate the same components, and for brevity, detailed descriptions of the same components in different embodiments are omitted. It should be understood that the dimensions such as thicknesses, lengths, and widths of various components in the embodiments of the present application shown in the drawings, as well as the overall dimensions such as thicknesses, lengths, and widths of integrated apparatuses, are merely exemplary descriptions and do not constitute any limitation on the present application.

"Multiple" appearing in the present application refers to more than two (including two).

From the development of the market form, the application of traction batteries is becoming more and more widespread. Traction batteries are not only applied to energy storage power systems such as hydraulic, thermal, wind, and solar power stations, but also widely applied to electric apparatuses such as vehicles, ships, or aircraft, so that the batteries and the like form power systems of the electric apparatuses to ensure the use safety and reliability of the electric apparatuses. For example, the electric apparatuses may be, but are not limited to, vehicles, mobile phones, tablets, notebook computers, ships, spacecraft, electric toys, and electric tools. The vehicles may be fuel vehicles, gas vehicles, new energy vehicles, or rail vehicles, and the new energy vehicles may be battery electric vehicles, hybrid vehicles, plug-in hybrid vehicles, range-extended electric vehicles, fuel cell powered vehicles, or the like.

For a vehicle, a body-in-white is a carrier for mounting and carrying components such as an engine, seats, and an air conditioning system of the vehicle. The body-in-white may include an upper vehicle body and a vehicle body. The upper vehicle body refers to a portion of the vehicle for carrying people and goods, for example, it may include a driving compartment, a passenger compartment, and the like. The vehicle body may include a front compartment assembly, a chemical compartment, and a rear floor assembly. It can be understood that in the description of the present application, orientations such as up, down, left, right, front, and rear are based on the orientation of the vehicle.

The front compartment assembly is configured to transmit front collision loads. For example, the front compartment assembly may include a front anti-collision beam, two front longitudinal beams, and two front torsion boxes. Front ends of the two front longitudinal beams are respectively connected to two ends of the front anti-collision beam, rear ends of the two front longitudinal beams are respectively connected to the two front torsion boxes, and the front torsion boxes are connected to the chemical compartment. When the vehicle receives a collision, the front anti-collision beam can evenly bear expansion loads, and the two front longitudinal beams and the corresponding two front torsion boxes jointly bear the collision loads to reduce damage to the passenger compartment.

The rear floor assembly is a mounting carrier for interior and exterior trims, electric appliances, and other system parts, and plays an important role in carrying passengers, placing spare tires, and reducing fuel tank damage and passenger injury through its own deformation during rear collision. For example, the rear floor assembly may include a rear anti-collision beam, two rear longitudinal beams, two rear torsion boxes, and a rear cross beam. Rear ends of the two rear longitudinal beams are respectively connected to two ends of the rear anti-collision beam, front ends of the two rear longitudinal beams are respectively connected to the two rear torsion boxes, the rear torsion boxes are connected to a battery assembly, and the rear cross beam connects the two rear torsion boxes. The upper vehicle body includes a rear floor, or the rear floor assembly includes a rear floor, so that the rear floor can be mounted between the two rear longitudinal beams.

The chemical compartment refers to a physical module including one or more battery cells to provide higher voltage and capacity. For example, the chemical compartment can define an accommodating space for accommodating one or more battery cells or battery modules to reduce or avoid the influence of liquids or other foreign objects on the charging or discharging of the battery cell. Moreover, the chemical compartment can not only be configured to accommodate the battery cell, but also be configured to be connected to structures such as the front compartment assembly and the rear floor assembly, serving as a load-bearing and force-transmitting structure as a portion of the vehicle body.

The battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the utility model. The battery cell may be in the shape of a cylinder, a flat body, a rectangular body, or in another shape, which is not limited in the embodiments of the utility model either. Battery cells are generally divided into three types according to packaging methods: cylindrical battery cells, prismatic battery cells, and pouch battery cells, which is not limited in the embodiments of the utility model either.

For example, the battery cell may include a housing, an electrode assembly, and an electrolyte. The housing is configured to accommodate the electrode assembly and the electrolyte. The electrode assembly includes a positive electrode plate, a negative electrode plate, and a separator. The battery cell mainly works by the movement of metal ions between the positive electrode plate and the negative electrode plate.

The chemical compartment is required to provide a relatively enclosed space for the battery cell to meet specific waterproof and dustproof level requirements, for example, meeting the IP68 protection level. In the related art, a front floor and an upper cover of a chemical compartment are integrated into one, and the chemical compartment is sealed by a sealing structure of the front floor, making it difficult to meet the protection level requirements of the chemical compartment. In the sealing structure of the front floor, there are height differences between side sealing regions and front and rear sealing regions, reducing the continuity of sealing surfaces. In addition, the front floor includes multiple parts, lap surfaces of the parts are not flat, and there are many joints, causing difficulty in guaranteeing the accuracy of the sealing surfaces. Lap joints, weld points, bolt mounting holes, and the like on the front floor all become factors causing sealing failure, leading to easy sealing failure of the chemical compartment.

Based on this, the present application proposes a vehicle body 100, including a chemical compartment 40. The chemical compartment 40 defines an accommodating space 401 for accommodating a battery cell 60 and a top opening in communication with the accommodating space 401. The chemical compartment 40 is provided with a sealing region 402 and a mounting point 50. The sealing region 402 extends around the top opening and is configured to be in sealing fit with a fitting component to allow the fitting component to cover and seal the top opening. The mounting point 50 is configured for mounting of the chemical compartment 40, and the mounting point 50 is located outside a region enclosed by the sealing region 402.

In the vehicle body 100 with the above structure, the fitting component is in sealing fit with the sealing region 402 of the chemical compartment 40, and the mounting point 50 of the chemical compartment 40 is located outside the region enclosed by the sealing region 402. This helps to improve the smoothness and continuity of a sealing surface and makes sealing less likely to be affected by other components, making it easier to achieve sealing, reducing factors in the region enclosed by the sealing region 402 that are likely to cause sealing failure, and improving the sealing reliability.

The vehicle body 100 disclosed in the embodiments of the present application may be used in a vehicle 1000, and the vehicle 1000 may be a fuel vehicle, a gas vehicle, a new energy vehicle, a rail vehicle, or the like, where the new energy vehicle may be a battery electric vehicle, a hybrid vehicle, a plug-in hybrid vehicle, a range-extended electric vehicle, a fuel cell powered vehicle, or the like.

The following describes a vehicle body 100 according to an embodiment of the present application with reference to the accompanying drawings.

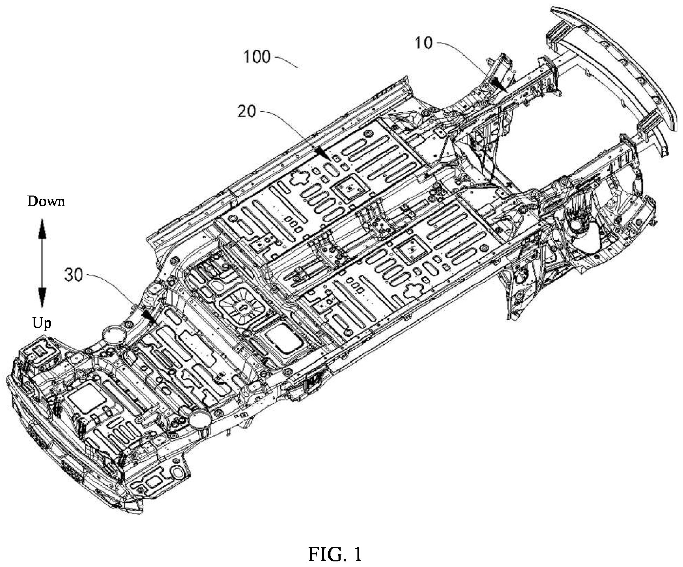

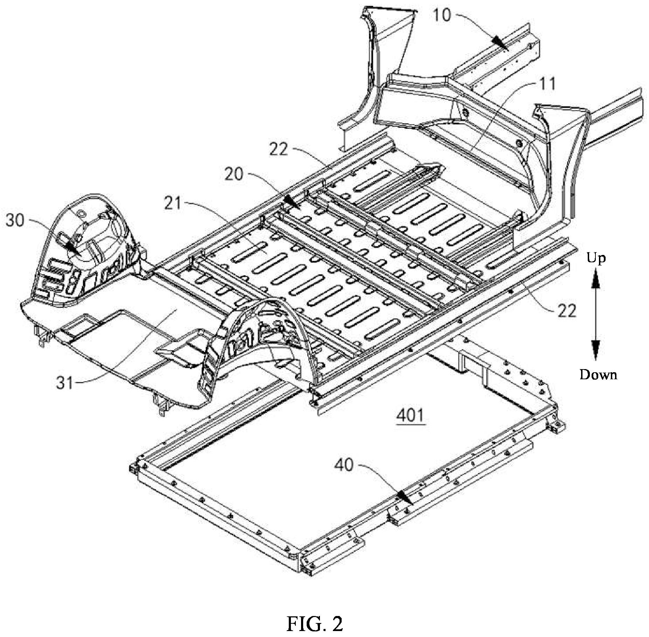

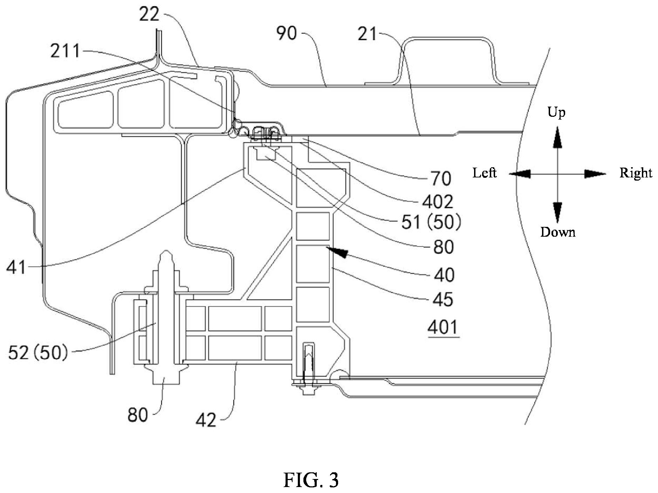

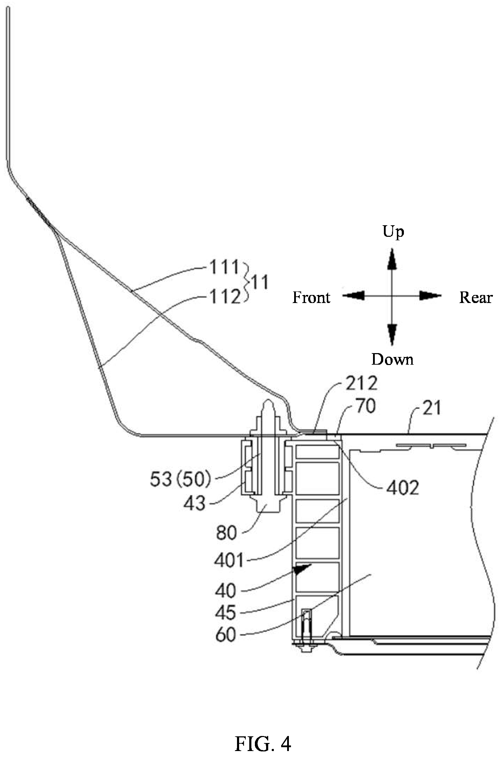

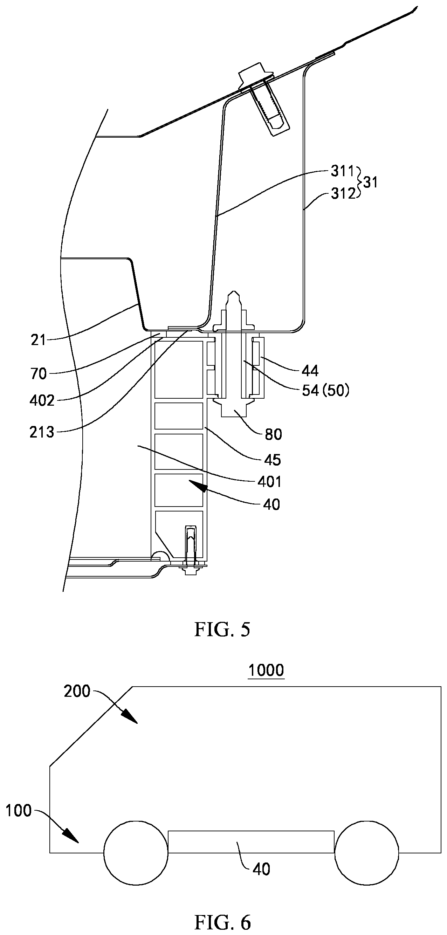

Reference is made to FIG. 1 to FIG. 5. FIG. 1 is a schematic partial structural diagram of a vehicle body 100 according to an embodiment of the present application; FIG. 2 is a schematic diagram of a chemical compartment 40, a front floor assembly 20, a rear floor 31, and a dash board 11 according to an embodiment of the present application; FIG. 3 is a schematic partial structural diagram of a chemical compartment 40, a front floor 21, and a sill beam 22 according to an embodiment of the present application; FIG. 4 is a schematic diagram of a partial fitting structure of a chemical compartment 40 and a dash board 11 according to an embodiment of the present application; and FIG. 5 is a schematic diagram of a partial fitting structure of a chemical compartment 40 and a rear floor 31 according to an embodiment of the present application. The vehicle body 100 includes a chemical compartment 40. The chemical compartment 40 defines an accommodating space 401 for accommodating a battery cell 60 and a top opening in communication with the accommodating space 401. The chemical compartment 40 is provided with a sealing region 402 and a mounting point 50. The sealing region 402 extends around the top opening and is configured to be in sealing fit with a fitting component to allow the fitting component to cover and seal the top opening. The mounting point 50 is configured for mounting of the chemical compartment 40, and the mounting point 50 is located outside a region enclosed by the sealing region 402.

The fitting component may be a component such as a cover or a floor of the vehicle 1000. The floor may be a front floor 21 or a rear floor 31. Alternatively, the front floor 21 and the rear floor 31 can jointly cover and seal the top opening. In the following description, the front floor 21 fitting with the sealing region 402 to cover and seal the top opening is used as an example for description. According to the following description, other solutions in which the top opening is covered and sealed by the fitting component are understandable to those skilled in the art.

The chemical compartment 40 defines the accommodating space 401 and the top opening, so that the chemical compartment 40 is formed as a compartment body without an upper cover. In an embodiment in which the front floor 21 covers and seals the top opening, the front floor 21 replaces the upper cover in the related art to seal the accommodating space 401, so as to protect the battery cell 60 and the like in the accommodating space 401.

The front floor 21 refers to a floor for mounting components such as seats and an armrest box in a passenger compartment and bearing the stepping of passengers. By using the front floor 21 to cover and seal the top opening of the chemical compartment 40, an upper cover of the chemical compartment 40 can be omitted, reducing the number of parts and reducing the space occupied in a vertical direction, and providing more space for mounting the battery cell 60 in the chemical compartment 40, thereby helping to increase the energy density. The front floor 21 may be integrated into an upper vehicle body 200 or into a vehicle body 100.

In addition, the sealing region 402 of the chemical compartment 40 may be a surface, a groove, a protrusion, or the like of the chemical compartment 40, as long as the sealing between the chemical compartment 40 and the fitting component can be achieved. Moreover, the sealing region 402 and the fitting component may be sealed in direct contact, or may be sealed through auxiliary accessories such as a sealing ring 70, both of which fall within the protection scope of the present application. In an embodiment in which the sealing is achieved through a sealing ring 70, the vehicle body 100 may include the sealing ring 70, or the upper vehicle body 200 may include the sealing ring 70.

The chemical compartment 40 is directly sealed with the fitting component such as the front floor 21, rather than sealed using a sealing structure between the fitting component and other components of the vehicle body 100 or between the fitting component and other components of the upper vehicle body 200, which is more prone to enhancing the sealing effect and is prone to improving the smoothness and continuity of the sealing surface. The sealing region 402 is not affected by other components of the vehicle body 100 and the upper vehicle body 200. This helps to improve the sealing continuity and reduce factors causing sealing failure.

The mounting point 50 of the chemical compartment 40 refers to a position for mounting and fastening the chemical compartment 40 to the vehicle body 100 or the upper vehicle body 200, and mounting methods include but are not limited to welding, snapping, and connection of fasteners 80. The chemical compartment 40 may be connected to other components of the vehicle body 100 or components of the upper vehicle body 200 through the mounting point 50, for example, may be connected to at least one of the front floor 21, the sill beam 22, the dash board 11, and the rear floor 31, to achieve mounting of the chemical compartment 40.

Moreover, as shown in FIG. 3 to FIG. 5, the mounting point 50 is located outside the region enclosed by the sealing region 402 to reduce joints of portions of the fitting component and the chemical compartment 40 opposite the region enclosed by the sealing region 402, improving the flatness, also helping to reduce factors causing sealing failure, and improving the sealing reliability.

For example, in some embodiments, a portion of the fitting component such as the floor opposite the region enclosed by the sealing region 402 continuously extends. In other words, this portion of the floor is not provided with any process hole, and does not need to be sealed and plugged, thereby reducing regions prone to sealing failure and improving the sealing reliability.

In the vehicle body 100 according to this embodiment of the present application, the mounting point 50 of the chemical compartment 40 is located outside the region enclosed by the sealing region 402. This helps to improve the smoothness and continuity of the sealing surface and makes sealing less likely to be affected by other components, making it easier to achieve sealing, reducing factors in the region enclosed by the sealing region 402 that are prone to cause sealing failure, and improving the sealing reliability.

In some embodiments, the sealing region 402 is a smooth surface. The smooth surface may be a plane. To be specific, different positions of the sealing region 402 are coplanar to eliminate height differences. The smooth surface may alternatively have height differences in different regions that are in transition connection through arc surfaces. Both can achieve continuous sealing of different regions between the chemical compartment 40 and the fitting component, improving the continuity of the sealing surface and reducing factors causing sealing failure.

In some embodiments, as shown in FIG. 3 to FIG. 5, the vehicle body 100 includes a sealing ring 70. The sealing ring 70 is in sealing contact with the sealing region 402 and is configured to seal a gap between the chemical compartment 40 and the fitting component such as the front floor 21. A material of the sealing ring 70 includes but is not limited to rubber and silicone. The sealing ring 70 may be an independent component provided between the chemical compartment 40 and the fitting component, or may be formed by applying and curing glue between the chemical compartment 40 and the fitting component. The provision of the sealing ring 70 can greatly enhance the sealing effect between the chemical compartment 40 and the fitting component, making it easier to meet the waterproof and dustproof requirements.

In some embodiments, as shown in FIG. 3 to FIG. 5, the mounting point 50 includes a mounting hole for mounting a fastener 80. The fastener 80 is configured to apply a locking force along the up-down direction to the chemical compartment 40, to compress the sealing region 402. The fastener 80 includes but is not limited to bolts, screws, and latches. By applying a locking force along the up-down direction to the chemical compartment 40 through the fastener 80, a compression force between the sealing region 402 of the chemical compartment 40 and the fitting component can be increased, enhancing the sealing effect, thereby helping to meet the waterproof and dustproof requirements. For example, when the sealing region 402 is in contact sealing with the fitting component, a compression force between two sealing surfaces can be increased through the fastener 80 to reduce the gap, thereby enhancing the sealing effect. In an embodiment in which the sealing ring 70 is used for sealing, the chemical compartment 40 and the fitting component clamp the sealing ring 70 by virtue of the locking force provided by the fastener 80, so that the sealing ring 70 is compressed and deforms to enhance the sealing effect.

According to some embodiments of the present application, as shown in FIG. 3, the mounting point 50 includes a first mounting point 51. The first mounting point 51 is configured to be connected to the fitting component to allow the fitting component to cover and seal the top opening. For example, the fitting component may be a floor. The floor may include a front floor 21, or the floor includes a rear floor 31, or the floor includes both a front floor 21 and a rear floor 31. The chemical compartment 40 is connected to the fitting component through the first mounting point 51. This, on one hand, can achieve mounting of the chemical compartment 40, and the first mounting point 51 is located outside the sealing region 402 to reduce factors causing sealing failure inside the sealing region 402. On the other hand, the first mounting point 51 of the chemical compartment 40 is directly connected to the fitting component, which has a more significant effect in improving the sealing between the chemical compartment 40 and the fitting component.

For example, the first mounting point 51 may include a mounting hole extending along the up-down direction, and the fastener 80 passes through the mounting hole and the fitting component to apply a compression force along the up-down direction to the sealing region 402 and the fitting component, thereby enhancing the sealing effect.

In some specific embodiments, as shown in FIG. 3, the chemical compartment 40 includes a side beam 45 and a first outward protrusion portion 41. The first outward protrusion portion 41 is provided on an upper portion of a peripheral surface of the side beam 45. The sealing region 402 is provided on an upper surface of the side beam 45, and the first mounting point 51 is provided on the first outward protrusion portion 41.

The side beam 45 may be configured to define the accommodating space 401. An upper end of the side beam 45 encloses the top opening, and the sealing region 402 is provided on the upper surface of the side beam 45, so that the sealing region 402 can surround the top opening, to facilitate complete sealing of the top opening. The first mounting point 51 is provided on an upper portion of the peripheral surface of the first outward protrusion portion 41, allowing for a shorter distance between the first mounting point 51 and the sealing region 402, and the connection between the first mounting point 51 and the fitting component has a better effect in increasing the compression force of the sealing region 402.

In some embodiments, still referring to FIG. 3, the mounting point 50 includes a second mounting point 52, and the second mounting point 52 is configured to be connected to the sill beam 22.

The sill beam 22 is a quite important protective component of the vehicle 1000, which can effectively resist external intrusion during side collision of the vehicle 1000, protect the integrity of the passenger compartment, and reduce injury to passengers in the vehicle. The chemical compartment 40 is connected to the sill beam 22 through the second mounting point 52, and the first mounting point 51 and the second mounting point 52 cooperate to increase connection sites of the chemical compartment 40, which can improve the mounting stability of the chemical compartment 40 and also helps to enhance the sealing effect of the sealing region 402.

In some specific embodiments, as shown in FIG. 3, the chemical compartment 40 includes a side beam 45, a first outward protrusion portion 41 provided on an upper portion of a peripheral surface of the side beam 45, and a second outward protrusion portion 42 provided on a lower portion of the peripheral surface of the side beam 45. The sealing region 402 is provided on an upper end surface of the side beam 45, the first mounting point 51 is provided on the first outward protrusion portion 41, and the second mounting point 52 is provided on the second outward protrusion portion 42.

The first outward protrusion portion 41 and the second outward protrusion portion 42 are respectively provided on the upper portion and the lower portion of the peripheral surface of the side beam 45, so that their connections to the sill beam 22 and the floor do not interfere with each other, and the chemical compartment 40 can be mounted in a larger range in the up-down direction, improving the mounting stability.

In some embodiments, a spacing between the first mounting point 51 and a peripheral edge of the sealing region 402 is smaller than a spacing between the second mounting point 52 and the peripheral edge of the sealing region 402. The first mounting point 51 is closer to the sealing region 402, achieving a better effect in improving the sealing performance. Specifically, in an inner-outer direction, that is, in a direction away from and close to a middle portion of the accommodating space 401, or in a direction perpendicular to the peripheral surface of the side beam 45, a dimension of the first outward protrusion portion 41 protruding from the peripheral surface of the side beam 45 is smaller than a dimension of the second outward protrusion portion 42 protruding from the peripheral surface of the side beam 45, so that the first mounting point 51 is closer to the sealing region 402 than the second mounting point 52, and the second outward protrusion portion 42 has high strength to provide more stable support and mounting for the chemical compartment 40, thereby improving the stability.

In some embodiments of the present application, the vehicle body 100 may not need to be provided with a floor such as the front floor 21. During assembly of the vehicle body 100 with the upper vehicle body 200, the chemical compartment 40 fits with the floor of the upper vehicle body 200 to achieve sealing. The floor does not occupy space of the vehicle body 100, and the vehicle body 100 can provide more space for mounting the battery cell 60, thereby helping to increase the power density.

In some other embodiments of the present application, as shown in FIG. 1 to FIG. 5, the vehicle body 100 further includes a floor, where the floor serves as the fitting component and is in sealing fit with the sealing region 402 to cover and seal the top opening. In other words, the floor is integrated into the vehicle body 100, and the upper vehicle body 200 does not need to be provided with a floor. The sealing and connection between the floor and the chemical compartment 40 can be achieved before the assembly of the vehicle body 100 and the upper vehicle body 200, which is prone to improving the convenience and the sealing effect of the sealing operation. Moreover, airtightness detection between the floor and the chemical compartment 40 does not need to be performed simultaneously with detection of a body-in-white, and there is no need to develop a detection line and repair line for the chemical compartment 40 in a general assembly workshop, helping to accelerate the production takt and reducing cost man-hours.

In addition, a portion of the floor opposite the region enclosed by the sealing region 402 continuously extends. In other words, this portion of the floor is not provided with any process hole, is a complete plate, and does not need to be sealed and plugged, thereby reducing regions prone to sealing failure and improving the sealing reliability.

It should be noted that the continuously extending portion of the floor may extend along a plane or form a concave-convex structure. Moreover, the floor may be a single-layer plate or a multi-layer plate. For a single-layer plate, a portion of the single-layer plate opposite the region enclosed by the sealing region 402 continuously extends. For a multi-layer plate, multiple layers of plate bodies are stacked along the up-down direction, where portions of one layer of plate body, multiple layers of plate bodies, or all plate bodies opposite the sealing region 402 can continuously extend. Both can make the portion of the floor opposite the region enclosed by the sealing region 402 continuously extend.

In some specific embodiments, the floor includes a front floor 21, the front floor 21 further includes a connecting point, and the connecting point is configured to be connected to at least one of the sill beam 22, the rear floor 31, and the dash board 11, where a connection method includes but is not limited to welding, bonding, and connection of a fastener 80. Moreover, the connecting point is located outside the region enclosed by the sealing region 402. Thus, lap joints, weld points, glue application, and the like on the front floor 21 that may become factors causing sealing failure are all located outside the region enclosed by the sealing region 402, further reducing the risk of sealing failure of the chemical compartment 40.

In some embodiments, as shown in FIG. 3, a peripheral edge of the front floor 21 is provided with a connecting portion 211 connected to the sill beam 22, and the connecting portion 211 is located outside the region enclosed by the sealing region 402.

A connection method of the connecting portion 211 and the sill beam 22 includes but is not limited to connection of a fastener 80, welding, and bonding. For example, the connecting portion 211 may be hermetically connected to the sill beam 22 through welding, bonding, or the like, thereby helping to achieve sealing of the passenger compartment.

A specific structure of the connecting portion 211 is not limited and may be a structure such as a flange or a protrusion. For example, as shown in FIG. 3, the connecting portion 211 is a flange extending upward or downward relative to the front floor 21, where a middle portion of the flange may be bonded to the sill beam 22, and at least one of an upper edge and a lower edge of the flange may be welded to the sill beam 22 to improve the mounting stability and sealing performance for the front floor 21.

The connecting portion 211 is located outside the region enclosed by the sealing region 402, so that a connecting structure of the connecting portion 211 does not affect the sealing of the chemical compartment 40, sealing failure of the connecting portion 211 does not lead to sealing failure of the chemical compartment 40, and height differences of the connecting portion 211 and the like do not affect the sealing difficulty of the chemical compartment 40.

According to some embodiments of the present application, as shown in FIG. 4, the mounting point 50 may include a third mounting point 53, and the third mounting point 53 is configured to be connected to the dash board 11. The chemical compartment 40 can be mounted and fastened at a front side of the third mounting point 53, improving the stability of the chemical compartment 40 and the uniformity of a circumferential force applied to the chemical compartment 40.

In addition, the floor (such as the front floor 21) includes a first fitting edge 212 at least partially located outside the region enclosed by the sealing region 402, and an upper surface of the first fitting edge 212 is configured to fit with a lower surface of the dash board 11 in a facing manner. Thus, the dash board 11, the first fitting edge 212, the sealing region 402, and the chemical compartment 40 are sequentially arranged from top to bottom. When the third mounting point 53 is connected to the dash board 11, the dash board 11 can limit the first fitting edge 212 of the floor from an upper side and apply a compression force to the first fitting edge 212 to improve the sealing performance between the first fitting edge 212 and the sealing region 402. In an embodiment in which a sealing ring 70 is provided, the compression force of the dash board 11 enables the first fitting edge 212 and the sealing region 402 to clamp the sealing ring 70, thereby enhancing the sealing effect.

Optionally, the first fitting edge 212 may be connected to the dash board 11 through welding or other methods, and the first fitting edge 212 is at least partially located outside the region enclosed by the sealing region 402, so that the connecting point may be arranged outside the region enclosed by the sealing region 402 to reduce factors causing sealing failure of the chemical compartment 40, thereby reducing the risk of sealing failure.

In some specific embodiments, still referring to FIG. 4, the chemical compartment 40 includes a side beam 45 and a third outward protrusion portion 43 provided on an upper portion of the peripheral surface of the side beam 45, the sealing region 402 is provided on an upper surface of the side beam 45, and the third mounting point 53 is provided on the third outward protrusion portion 43.

The third mounting point 53 is close to the sealing region 402, which is more conducive to enhancing the sealing effect of the sealing region 402. Moreover, the third mounting point 53 is provided on the third outward protrusion portion 43, facilitating the mounting operation at the third mounting point 53. The third outward protrusion portion 43 can also enhance the structural strength of the side beam 45 and improve the collision resistance.

In some embodiments of the present application, as shown in FIG. 4, the dash board 11 includes a first plate body 111 and a first reinforcing plate 112 located on a lower side of the first plate body 111. An edge of the first reinforcing plate 112 is connected to the first plate body 111 and a middle portion is spaced from the first plate body 111, so that the first reinforcing plate 112 can enhance the strength of the first plate body 111, and a cavity is formed between the first reinforcing plate 112 and the first plate body 111. The first fitting edge 212 is located between the edge of the first reinforcing plate 112 and the sealing region 402, that is, a connection region between the first reinforcing plate 112 and the first plate body 111 is opposite the first fitting edge 212, and the connection region has higher strength, so that a more stable compression force is applied to the first fitting edge 212. The third mounting point 53 may be connected to the middle portion of the first reinforcing plate 112, and a connecting structure does not need to be provided on the first plate body 111, helping to improve the integrity of the first plate body 111. For example, the fastener 80 passes through the third mounting point 53 and the first reinforcing plate 112 and extends into the cavity above the first reinforcing plate 112.

According to some embodiments of the present application, as shown in FIG. 5, the mounting point 50 includes a fourth mounting point 54, and the fourth mounting point 54 is configured to be connected to the rear floor 31. The chemical compartment 40 can be mounted and fastened at a rear side of the fourth mounting point 54, improving the stability of the chemical compartment 40 and the uniformity of a circumferential force applied to the chemical compartment 40.

In addition, the floor includes a front floor 21, the front floor 21 includes a second fitting edge 213 at least partially located outside the region enclosed by the sealing region 402, and an upper surface of the second fitting edge 213 is configured to fit with a lower surface of the rear floor 31 in a facing manner. Thus, the rear floor 31, the second fitting edge 213, the sealing region 402, and the chemical compartment 40 are sequentially arranged from top to bottom. When the fourth mounting point 54 is connected to the rear floor 31, the rear floor 31 can limit the second fitting edge 213 of the front floor 21 from an upper side and apply a compression force to the second fitting edge 213 to improve the sealing performance between the second fitting edge 213 and the sealing region 402. In an embodiment in which a sealing ring 70 is provided, the compression force of the rear floor 31 enables the second fitting edge 213 and the sealing region 402 to clamp the sealing ring 70, thereby enhancing the sealing effect.

Optionally, the second fitting edge 213 may be connected to the rear floor 31 through welding or other methods, and the second fitting edge 213 is at least partially located outside the region enclosed by the sealing region 402, so that the connecting point may be arranged outside the region enclosed by the sealing region 402 to reduce factors causing sealing failure of the chemical compartment 40, thereby reducing the risk of sealing failure.

In some specific embodiments, still referring to FIG. 5, the chemical compartment 40 includes a side beam 45 and a fourth outward protrusion portion 44 provided on an upper portion of a peripheral surface of the side beam 45, the sealing region 402 is provided on an upper surface of the side beam 45, and the fourth mounting point 54 is provided on the fourth outward protrusion portion 44.

The fourth mounting point 54 is close to the sealing region 402, which is more conducive to enhancing the sealing effect of the sealing region 402. Moreover, the fourth mounting point 54 is provided on the fourth outward protrusion portion 44, facilitating the mounting operation at the fourth mounting point 54. The fourth outward protrusion portion 44 can also enhance the structural strength of the side beam 45 and improve the collision resistance.

In some embodiments of the present application, as shown in FIG. 5, the rear floor 31 includes a second plate body 311 and a second reinforcing plate 312 located on a lower side of the second plate body 311. An edge of the second reinforcing plate 312 is connected to the second plate body 311 and a middle portion is spaced from the second plate body 311, so that the second reinforcing plate 312 can enhance the strength of the second plate body 311, and a cavity is formed between the second reinforcing plate 312 and the second plate body 311. The second fitting edge 213 is located between the edge of the second reinforcing plate 312 and the sealing region 402, that is, a connection region between the second reinforcing plate 312 and the second plate body 311 is opposite the second fitting edge 213, and the connection region has higher strength, so that a more stable compression force is applied to the second fitting edge 213. A fourth connecting member is connected to the middle portion of the second reinforcing plate 312, and a connecting structure does not need to be provided on the second plate body 311, helping to improve the integrity of the second plate body 311. For example, the fastener 80 passes through the fourth mounting point 54 and the second reinforcing plate 312 and extends into the cavity above the second reinforcing plate 312.

According to some embodiments of the present application, the vehicle body 100 includes a front compartment assembly 10 and a rear floor assembly 30, the chemical compartment 40 is connected between the front compartment assembly 10 and the rear floor assembly 30, the chemical compartment 40 is suitable for being detachably connected to the upper vehicle body 200 of the vehicle 1000, and the upper vehicle body 200 includes the fitting component such as a floor.

The chemical compartment 40 is connected between the front compartment assembly 10 and the rear floor assembly 30, and a connection method may be a detachable connection or a fixed connection, such as welding, bonding, and connection of a fastener 80.

The chemical compartment 40 is detachably connected to the upper vehicle body 200, and the upper vehicle body 200 includes the fitting component, so that when the chemical compartment 40 needs maintenance, the chemical compartment 40 can be separated from the upper vehicle body 200, and thus the chemical compartment 40 is separated from the fitting component, achieving convenient maintenance of the chemical compartment 40.

According to some other embodiments of the present application, as shown in FIG. 1 and FIG. 2, the vehicle body 100 includes a front compartment assembly 10, a front floor assembly 20, and a rear floor assembly 30, the front floor assembly 20 is connected between the front compartment assembly 10 and the rear floor assembly 30 to form an integral body, and a connection method may be a detachable connection or a fixed connection. The front floor assembly 20 includes the fitting component, for example, the fitting component is the front floor 21. The front floor assembly 20 includes the sill beam 22 and the front floor 21 connected to the sill beam 22, so that the fitting component is integrated into the vehicle body 100. The chemical compartment 40 is located on a lower side of the front floor assembly 20 and detachably connected to the front floor assembly 20.

During maintenance of the chemical compartment 40, the chemical compartment 40 can be dismounted from the vehicle body 100 and separated from the fitting component to achieve dismounting of the chemical compartment 40, and the dismounting process is not affected by interior components of the passenger compartment, so that there is no need to dismount the interior components of the passenger compartment, simplifying the mounting and dismounting processes.

As shown in FIG. 1 to FIG. 5, a connecting structure for a chemical compartment 40 of the embodiments according to the second aspect of the present application includes: a chemical compartment 40, a fitting component, and a sealing ring 70. The chemical compartment 40 defines an accommodating space 401 for accommodating a battery cell 60 and a top opening in communication with the accommodating space 401, and the fitting component covers and seals the top opening. The sealing ring 70 is provided between the fitting component and the chemical compartment 40 and extends around the top opening, where a portion of the fitting component opposite the region enclosed by the sealing ring 70 continuously extends.

The fitting component includes but is not limited to a cover and a floor, and the floor may include at least one of a front floor 21 and a rear floor 31.

In the connecting structure for a chemical compartment 40 according to this embodiment of the present application, the fitting component seals the top opening of the chemical compartment 40, and the portion of the fitting component opposite the region enclosed by the sealing ring 70 continuously extends, so that factors causing sealing failure between the fitting component and the chemical compartment 40 can be reduced, improving the sealing reliability.

It should be noted that, for contents of the vehicle body 100 of the embodiments according to the first aspect of the present application and the connecting structure for a chemical compartment 40 of the embodiments according to the second aspect, cross reference can be made to each other. All technical features of the vehicle body 100 of the embodiments according to the first aspect can be introduced into the connecting structure for a chemical compartment 40 of the embodiments according to the second aspect, and all technical features of the connecting structure for a chemical compartment 40 of the embodiments according to the second aspect can be introduced into the vehicle body 100 of the embodiments according to the first aspect. Details are not described herein again.

In some embodiments, as shown in FIG. 3 to FIG. 5, the chemical compartment 40 is provided with a mounting point 50, the mounting point 50 is configured to be connected to at least one of the fitting component and the dash board 11, and the mounting point 50 is located outside the region enclosed by the sealing ring 70. Thus, joints of portions of the fitting component and the chemical compartment 40 opposite the region enclosed by the sealing region 402 can be reduced, improving the flatness, also helping to reduce factors causing sealing failure, and improving the sealing reliability.

In some embodiments, as shown in FIG. 3 to FIG. 5, the fitting component includes a front floor 21 and is provided with a connecting point, the connecting point is configured to be connected to at least one of the sill beam 22, the rear floor 31, and the dash board 11, and the connecting point is located outside the region enclosed by the sealing ring 70. Thus, lap joints, weld points, glue application, and the like on the front floor 21 that may become factors causing sealing failure are all located outside the region enclosed by the sealing region 402, further reducing the risk of sealing failure of the chemical compartment 40.

As shown in FIG. 6, the vehicle 1000 of the embodiments according to the third aspect of the present application is provided, including an upper vehicle body 200 and the vehicle body 100 according to the embodiments of the present application, where the vehicle body 100 is provided on a lower side of the upper vehicle body 200; or the connecting structure for a chemical compartment 40 according to the embodiments of the present application is provided. Thus, by adopting the above vehicle body 100 or the above connecting structure for a chemical compartment 40, factors in the region enclosed by the sealing region 402 that are prone to causing sealing failure can be reduced, improving the sealing reliability.

When the chemical compartment 40 is used in the vehicle 1000, the battery cell 60 in the chemical compartment 40 may be configured to supply power to the vehicle 1000, for example, may serve as an operating power source of the vehicle 1000. The vehicle 1000 may further include a controller and a motor, and the controller is configured to control the chemical compartment 40 to supply power to the motor, for example, for the operating power needs of starting, navigation, and driving of the vehicle 1000.

The assembly method of the embodiments according to the fourth aspect of the present application is applied to the above vehicle body 100, and the assembly method may include:
allowing a sealing region 402 of a chemical compartment 40 to be in a sealing fit with a fitting component to cover and seal a top opening of the chemical compartment 40; and
connecting a mounting point 50 of the chemical compartment 40 to at least one of the fitting component and a dash board 11, to compress the sealing region 402.

In the assembly method according to the embodiments of the present application, the fitting component is in sealing fit with the chemical compartment 40, and the chemical compartment 40 is connected through the mounting point 50 to compress the sealing region 402, so that the sealing effect can be enhanced to meet the waterproof and dustproof requirements. In addition, a connecting structure of the mounting point 50 is located outside the region enclosed by the sealing region 402, and factors causing sealing failure between the fitting component and the chemical compartment 40 can be reduced after assembly, improving the sealing reliability.

The following describes a vehicle body 100 according to a specific embodiment of the present application and a vehicle 1000 including the same with reference to the accompanying drawings.

As shown in FIG. 1 to FIG. 6, the vehicle 1000 includes an upper vehicle body 200 and a vehicle body 100. The vehicle body 100 includes a front compartment assembly 10, a front floor assembly 20, a rear floor assembly 30, a chemical compartment 40, and a sealing ring 70. The front compartment assembly 10 includes a dash board 11. The front floor assembly 20 includes a sill beam 22, a front floor 21, and a seat mounting beam 90, where the seat mounting beam 90 is provided above the front floor 21 and connected to the sill beam 22. The rear floor assembly 30 includes a rear floor 31. The chemical compartment 40 includes a frame body and a bottom plate, where the frame body includes multiple side beams 45 connected end to end and outward protrusion portions provided on peripheral surfaces of the side beams 45. The frame body defines an accommodating space 401, a top opening, and a lower end opening, where the bottom plate covers and seals the lower end opening of the frame body. The chemical compartment 40 is formed as a compartment body without an upper cover and is mounted on the vehicle body 100.

The front floor 21 covers and seals the top opening of the chemical compartment 40, and a sealing ring 70 is used for sealing. The front floor 21 has both the function of a passenger compartment floor and the function of an upper cover of the chemical compartment 40. Mounting points 50 of the chemical compartment 40 are located outside the sealing ring 70 and are uniformly arranged, and the mounting points 50 are connected to the front floor 21, the dash board 11, and the rear floor 31 through a fastener 80 to achieve uniform compression of the sealing ring 70.

Moreover, the front floor 21 is a complete part, and the corresponding front floor 21 in the region enclosed by the sealing ring 70 is not provided with any process hole, and no splicing joint is generated. After the front floor assembly 20 is welded and subjected to airtightness testing, a welding point between the front floor assembly 20 and the front compartment assembly 10 as well as a welding point between the rear floor assembly 30 and the front floor assembly 20 are both outside the sealing ring 70. A front side of the front floor 21 extends below the dash board 11, and a lap surface between the front floor 21 and the dash board 11 is outside the sealing ring 70. A rear side of the front floor 21 extends below the rear floor 31, and a lap surface between the front floor 21 and the rear floor 31 is outside the sealing ring 70. Thus, an entire surface of the front floor 21 is sealed with the chemical compartment 40, and a sealing surface between the front floor 21 and the chemical compartment 40 is a complete plane.

In the above embodiments, the front floor 21 replaces a traditional upper cover, reducing the number of parts and occupied space, thereby helping to increase the energy density. Moreover, all connecting structures of the front floor 21 and all mounting points 50 of the chemical compartment 40 are arranged outside the sealing ring 70, and a portion of the front floor 21 opposite the region enclosed by the sealing ring 70 is not provided with any process hole, effectively reducing factors causing sealing failure and improving the sealing reliability.

It should be noted that, without conflict, the embodiments in the present application and the features in the embodiments can be combined with each other.

The above descriptions are merely preferred embodiments of the present application and are not intended to limit the present application. For those skilled in the art, various changes and modifications can be made to the present application. Any modifications, equivalent replacements, improvements, and the like made within the spirit and principles of the present application shall be included in the protection scope of the present application.

## Claims

1. A vehicle body, comprising:
a chemical compartment, wherein the chemical compartment defines an accommodating space for accommodating a battery cell and a top opening in communication with the accommodating space, wherein
the chemical compartment is provided with a sealing region and a mounting point; the sealing region extends around the top opening and is configured to be in sealing fit with a fitting component, to allow the fitting component to cover and seal the top opening; the mounting point is configured for mounting of the chemical compartment; and the mounting point is located outside a region enclosed by the sealing region.

2. The vehicle body according to claim 1, wherein the sealing region is a smooth surface.

3. The vehicle body according to claim 1 or 2, further comprising a sealing ring, wherein the sealing ring is in sealing contact with the sealing region.

4. The vehicle body according to any one of claims 1 to 3, wherein the mounting point comprises a mounting hole for mounting a fastener, and the fastener is configured to apply a locking force along an up-down direction to the chemical compartment, to compress the sealing region.

5. The vehicle body according to any one of claims 1 to 4, wherein the mounting point comprises a first mounting point, and the first mounting point is configured to be connected to the fitting component.

6. The vehicle body according to claim 5, wherein the mounting point comprises a second mounting point, and the second mounting point is configured to be connected to a sill beam.

7. The vehicle body according to claim 6, wherein the chemical compartment comprises a side beam, a first outward protrusion portion provided on an upper portion of a peripheral surface of the side beam, and a second outward protrusion portion provided on a lower portion of the peripheral surface of the side beam; the sealing region is provided on an upper end surface of the side beam; the first mounting point is provided on the first outward protrusion portion; and the second mounting point is provided on the second outward protrusion portion.

8. The vehicle body according to any one of claims 1 to 7, further comprising a floor, wherein the floor serves as the fitting component and is in sealing fit with the sealing region to cover and seal the top opening, and a portion of the floor opposite the region enclosed by the sealing region continuously extends.

9. The vehicle body according to claim 8, wherein the floor comprises a front floor, a peripheral edge of the front floor is provided with a connecting portion connected to a sill beam, and the connecting portion is located outside the region enclosed by the sealing region.

10. The vehicle body according to claim 8 or 9, wherein the mounting point comprises a third mounting point, the third mounting point is configured to be connected to a dash board, the floor comprises a first fitting edge at least partially located outside the region enclosed by the sealing region, and an upper surface of the first fitting edge is configured to fit with a lower surface of the dash board in a facing manner.

11. The vehicle body according to claim 10, wherein the chemical compartment comprises a side beam and a third outward protrusion portion provided on an upper portion of a peripheral surface of the side beam, the sealing region is provided on an upper surface of the side beam, and the third mounting point is provided on the third outward protrusion portion.

12. The vehicle body according to any one of claims 8 to 11, wherein the mounting point comprises a fourth mounting point, the fourth mounting point is configured to be connected to a rear floor, the floor comprises a front floor, the front floor comprises a second fitting edge at least partially located outside the region enclosed by the sealing region, and an upper surface of the second fitting edge is configured to fit with a lower surface of the rear floor in a facing manner.

13. The vehicle body according to claim 12, wherein the chemical compartment comprises a side beam and a fourth outward protrusion portion provided on an upper portion of a peripheral surface of the side beam, the sealing region is provided on an upper surface of the side beam, and the fourth mounting point is provided on the fourth outward protrusion portion.

14. The vehicle body according to any one of claims 1 to 13, comprising a front compartment assembly and a rear floor assembly, the chemical compartment is connected between the front compartment assembly and the rear floor assembly, the chemical compartment is suitable for being detachably connected to an upper vehicle body of a vehicle, and the upper vehicle body comprises the fitting component.

15. The vehicle body according to any one of claims 1 to 13, comprising a front compartment assembly, a front floor assembly, and a rear floor assembly, wherein the front floor assembly is connected between the front compartment assembly and the rear floor assembly, the front floor assembly comprises the fitting component, and the chemical compartment is located on a lower side of the front floor assembly and detachably connected to the front floor assembly.

16. A connecting structure for a chemical compartment, comprising:
a chemical compartment, wherein the chemical compartment defines an accommodating space for accommodating a battery cell and a top opening in communication with the accommodating space;
a fitting component, wherein the fitting component covers and seals the top opening; and
a sealing ring, wherein the sealing ring is provided between the fitting component and the chemical compartment and extends around the top opening, wherein a portion of the fitting component opposite a region enclosed by the sealing ring continuously extends.

17. The connecting structure for a chemical compartment according to claim 16, wherein
the chemical compartment is provided with a mounting point, the mounting point is configured to be connected to at least one of the fitting component and a dash board, and the mounting point is located outside the region enclosed by the sealing ring; and/or
the fitting component comprises a front floor and is provided with a connecting point, the connecting point is configured to be connected to at least one of a sill beam, a rear floor, and the dash board, and the connecting point is located outside the region enclosed by the sealing ring.

18. A vehicle, comprising an upper vehicle body and the vehicle body according to any one of claims 1 to 15, wherein the vehicle body is provided on a lower side of the upper vehicle body; or comprising the connecting structure for a chemical compartment according to claim 16 or 17.

19. An assembly method for the vehicle body according to any one of claims 1 to 15, wherein the assembly method comprises:
allowing a sealing region of the chemical compartment to be in sealing fit with a fitting component, to cover and seal a top opening of the chemical compartment;
connecting a mounting point of the chemical compartment to at least one of the fitting component and a dash board, to compress the sealing region.
